# EUROPEAN PATENT SPECIFICATION

(11) **EP 3 922 147 B1**
(45) Date of publication and mention of the grant of the patent: **07.06.2023**
(21) Application number: 20711670.8
(22) Date of filing: 06.02.2020
(51) Int. Cl.: A47J 31/18

(54) **SYSTEM FOR PREPARING AROMATIC BEVERAGES, SUCH AS TEA**
SYSTEM ZUR HERSTELLUNG VON AROMATISCHEN GETRÄNKEN WIE TEE
SYSTÈME DE PRÉPARATION DE BOISSONS AROMATISÉES TELLES QUE, PAR EXEMPLE, DU THÉ

(30) Priority: 08.02.2019 PT 2019115303
(43) Date of publication of application: 15.12.2021
(73) Proprietor: Novadelta - Comércio e Indústria de Cafés, Unipessoal Lda, 1950-041 Lisboa (PT)
(72) Inventor: NABEIRO, Rui Miguel, 7370-112 CAMPO MAIOR (PT); DE FIGUEIREDO BRANCO, João André, 1885-091 MOSCAVIDE (PT)
(74) Representative: Ferreira Pinto, Francisca
(86) International application number: PCT/PT2020/050007
(87) International publication number: WO 2020/162778

(56) References cited:
- IT-A1- BO20 090 410
- US-A1- 2017 079 468

## Description

### Field of the invention

The present invention refers to the field of systems for preparing aromatic beverages by means of infusion of a respective precursor substance, in particular systems with fluid discharge means to the interior of a fluid recipient along a direction opposite to the direction of the gravity force.

### Background of the invention

In the prior art there are known beverage preparation machines that present fluid recipients for beverage preparation, for example water, for infusion of a respective beverage precursor substance. Said recipients can be provided as reservoirs that supply fluid to an infusion device, such as for example in the case of drip coffee machines, or be provided as recipients where the infusion of beverage precursor substance unfolds, such as for example in the case of teapots for preparing tea. Said machines present different recipient placement dispositions of supply of beverage preparation fluid.

Moreover, the prior art includes several beverage preparation machines with beverage discharge in a direction opposite to the one of the gravity force, that is, through the base region of drinking recipients, such as for example cups. Said machines present recipient placement dispositions including beverage discharge device and adapted for operative retention of the drinking recipient.

In particular in the case of aromatic beverages such as for example coffee or tea, the beverage discharge is a relevant process with potential impact upon the beverage quality obtained in the drinking recipient. In fact, the main characteristics of the discharge flow determine several aspects such as the eventual premature cooling of the beverage as a result of exposure thereof to air during the discharge to a cup, or other beverage drinking recipient.

The prior art includes several examples of relative disposition of these types recipients, of beverage preparation fluid and of beverage, in a beverage preparation apparatus.

The document DE 2009 048233 A1 discloses a system of the type of the present invention whereby portions of edible substance are provided to a collection space and the beverage discharge unfolds along a direction opposite to the gravity force. In particular, the document discloses an apparatus that includes a placement disposition of preparation fluid recipient that in this case is provided as a capsule with a shape and dimension at least approximately similar to the capsule that contains the edible substance. Moreover, the discharge of the preparation fluid from a respective recipient is carried out at a level similar to the one of injection thereof into the capsule that contains the edible substance, but clearly below the level of beverage discharge into a drinking recipient.

The document WO 2014/086915 A1 discloses a similar system whereby there seems to be an opening for introducing a portion of edible substance and a beverage discharge provided at a similar height. However, the document does not disclose placement dispositions of preparation fluid and beverage recipients, at at least approximately similar levels on the apparatus.

The document WO 2015/084203 A1 filed by the author of the present application discloses a system for preparing aromatic beverages with particularly small configuration and dimensions, so that provides advantages in terms of portability of the apparatus.

The document WO 2017/200409 A1 also filed by the author of the present application discloses a system for preparing aromatic beverages with an optimized beverage discharge disposition and also presenting advantageous configurations of the apparatus.

The document IT B020090410 A1 relates to a method and device for preparing a beverage, in particular coffee in Turkish manner. The device includes a beverage preparation recipient that can collect a fluid for infusion of a beverage precursor substance and adapted so that can receive fluid through a base region thereof.

The document US 2017/0079468 A1 also relates to beverage dispensing systems and methods of the general type of the present invention.

### General description of the invention

The objective of the present invention is to provide a beverage preparation system, in particular based upon the infusion of a respective precursor substance, including a beverage preparation apparatus that presents first and second recipient placement dispositions configured so that drinking and beverage preparation recipients can be placed thereupon, respectively, said system being adapted so as to provide a general configuration that is more compact and, specially, of more planar shape, as a sort of cup tray, adapted to the placement of said recipients and to the general ergonomic of use of said apparatus, notably in terms of portability thereof.

This objective is solved according to the present invention by means of a system for distribution of edible products according to claim 1.

An associated objective is to disclose a relative disposition of components and configuration of apparatus that minimizes the constructive height necessary to accommodate the fluid circulation between a fluid supply recipient and the beverage discharge to the beverage preparation recipient, in particular with a total height that is smaller than any of the remaining characteristic dimensions, on an apparatus whereby the fluid discharge for beverage preparation to the interior of a respective beverage preparation recipient, is carried out in a direction contrary to the direction of the gravity force.

In particular, said drinking recipient is understood as the recipient used for final consumption of the beverage, such as for example of glass, cup or similar type. Said beverage preparation recipient is understood as a recipient configured for collecting a quantity of the fluid used in a mixture, for example of the infusion type, or added to another fluid so as to prepare a beverage, and generally corresponding to the quantity required for preparing a plurality of individual beverage portions for final consumption.

It is preferred when said apparatus is adapted for preparation of beverages by infusion, in particular of aromatic beverages such as tea or coffee, based upon the interaction between a beverage preparation fluid with a corresponding portion of beverage precursor substance inside of said beverage preparation recipient.

It is preferred when said apparatus presents an access disposition provided in a general shape of lid type or similar, and adapted so that can selectively cover at least one of, preferentially both, said first and second recipient placement dispositions, and when said access disposition is provided in one piece or in a plurality of pieces, and configured so that can selectively cover both of said recipient placement dispositions jointly and/or individually

It is preferred when said apparatus comprises a fluid reservoir provided in flow connection with a fluid pressurization device and with the fluid discharge element on said second recipient placement disposition.

It is further preferred when said top part of said apparatus only presents said first and second recipient placement dispositions, and is preferentially devoid of any other cavities or protuberances.

It is preferred when the system according to the present invention further comprises portions of edible substance, for example tea or coffee, provided so that can be introduced on said beverage preparation recipient.

### Description of the figures

The invention shall be hereinafter described in greater detail based upon preferred embodiments and on the attached Figures.

The Figures show, in simplified schematic representations:
- Figure 1:: front and top views (on the right-hand side) of an embodiment of a system according to the present invention, whereby the apparatus (1) presents the access disposition (4) in a closed position;
- Figure 2:: views of the embodiment according to Figure 1, whereby the apparatus (1) presents the access disposition (4) in a removed condition;
- Figure 3:: side view of a second embodiment according to Figure 1, with the access disposition (4) removed and the drinking (9) and fluid recipients (11) placed;
- Figure 4:: top view according to Figure 3;
- Figure 5:: side view of a third embodiment, with the access disposition (4) removed and the drinking (9) and fluid (11) recipients not placed;
- Figure 6:: top view according to Figure 5.

### Detailed description of preferred embodiments of the invention

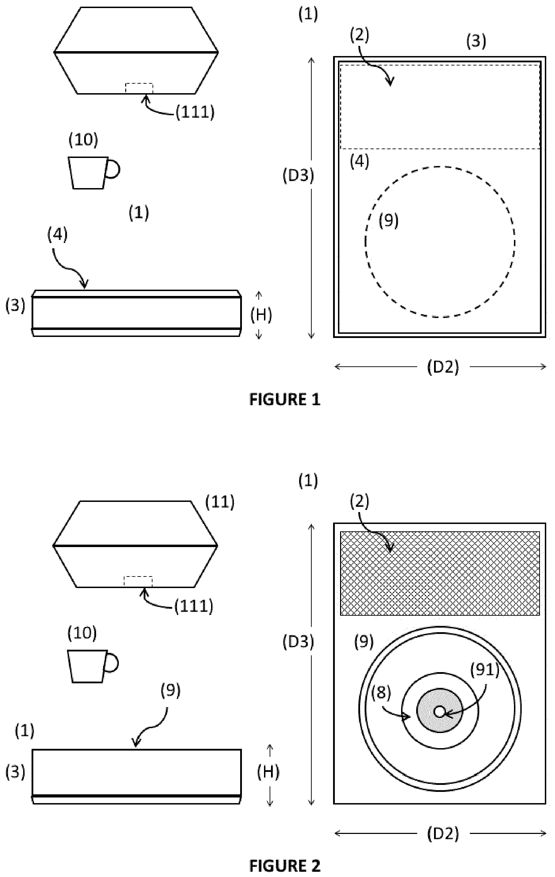

**Figures 1** and **2** represent a first embodiment of a system according to the present invention.

Said system basically includes a beverage preparation apparatus (1), drinking recipients (10, 10') and beverage preparation recipients (11, 11') presenting a collection space of a fluid volume for beverage preparation, for example water. Said system can further comprises previously produced portions of edible substance.

The apparatus (1) can present a first recipient placement disposition (2) on the top region of the apparatus envelope (3) and configured so that provides the placement of a plurality of drinking recipients (10, 10'). Said first recipient placement disposition (2) can be provided non-aligned with a beverage discharge line directly from the beverage preparation recipient (11, 11'). As represented, the drinking recipient (10) can be in the form of a cup of tea, or similar.

Said apparatus (1) further presents a second recipient placement disposition (9) adapted so that provides the placement, particularly preferentially with removable retention, of at least one type of beverage preparation recipient (11, 11'). In the case of the represented embodiment, said beverage preparation recipient (11, 11') is provided in the form of a thermal recipient adapted so as to mitigate the heat loss through the respective envelope.

According to an inventive aspect, said beverage preparation recipient (11, 11') presents a base region adapted so that can receive a fluid flow (FS), and preferentially also a heat flux, when placed on the operative retention position on said second recipient placement disposition (9).

In particular, said beverage preparation recipient (11, 11') presents a flow regulation element (111, 111') on the base region, adapted so that only provides flow passageway when the flow pressure is bigger than a previously defined value. It is preferred when said flow pressure is bigger than the atmospheric pressure, preferentially bigger than 1,2 bar, and smaller than 5 bar, preferentially smaller than 3 bar. This flow regulation element can be, for example, of single-way valve type (111) or plurality of micro-holes (111') with an appropriate characteristic dimensions. These means are known in the prior art such one herewith abdicates of a more detailed representation or description thereof.

Moreover, as represented in **Figure 2****,** the base surface associated with said second recipient placement disposition (9) presents a heating device (8), configured so that can provide a heating power through the base of the beverage preparation recipient (11, 11'). The base of said recipient (11, 11') is adapted in corresponding manner, so as to promote heat transfer to the fluid inside, for example through a thermally conducting material.

It is preferred when the apparatus (1) provides an indication to the user, for example of haptic type, visual or acoustic signal, when the beverage preparation recipient (11, 11') is correctly retained on said operative retention position, and can thereby provide a flow connection through the base region, liquid sealed with respect to the vicinity thereof.

According to an inventive aspect, said first and second recipient placement dispositions (2, 9), in particular at least the base region thereof, are advantageously provided at a level at least approximately similar of said apparatus (1).

Moreover, in the case of the represented embodiment, the first and second recipient placement dispositions (2, 9) are both provided at a level closer to the base region than to the top region of said apparatus (1). This relative disposition advantageously provides a smaller construction height of the apparatus for accommodating the several components of fluid circulation between the beverage preparation recipient (11) and the drinking recipient (10).

As further represents in Figures 1 and 2, the apparatus (1) in this case presents an apparatus envelope (3) and an access disposition (4) that jointly define, at least substantially, the volume geometry of the apparatus (1), in particular a coherent geometry that in this case at least approximately corresponds to a cube.

Advantageously, said access disposition (4) provides selective access to said recipient placement disposition (2) and product discharge, so that prevents the possibility of accumulation of dusts and other residues as a result of exposure to environmental at a given location of use of the apparatus (1).

It is particularly preferred, when the recipient placement disposition (2), and respective product discharge, is herewith selectively confined with respect to the exterior of the apparatus (1), so that the possibility of contamination thereof is mitigated.

Moreover, said apparatus envelope (3) and access disposition (4) jointly define a material volumetric that is preferentially substantially continuous, devoid of projections or cavities.

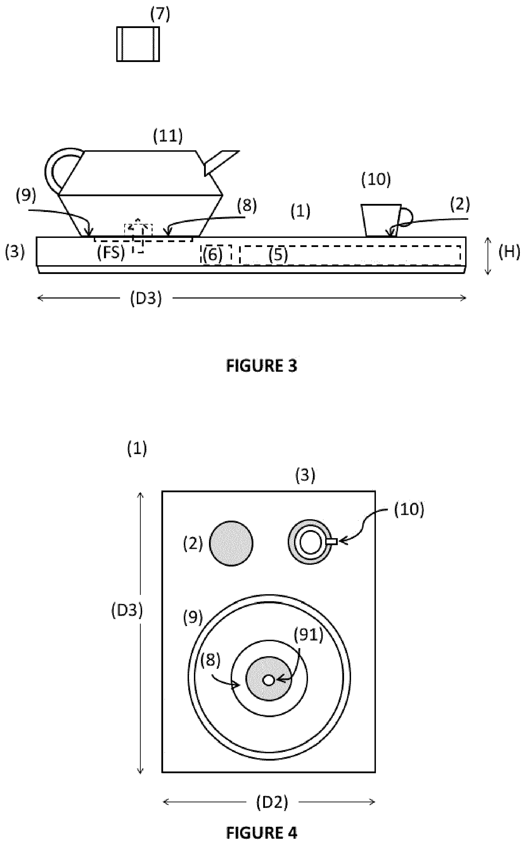

**Figures 3** and **4** represent a second embodiment according to the present invention, whereby the apparatus (1) according to the present invention presents an apparatus envelope (3) with a general shape of a tray board type, thereby improving the general ergonomic of use thereof.

The beverage preparation apparatus (1) comprises a second recipient placement disposition (9) that presents a fluid discharge element (91) and is adapted for placement of at least one type of beverage preparation recipient (11, 11'), on an operative retention position so that said fluid discharge element (91) is substantially aligned with a flow regulation element (111, 111'), for example of type single-way valve or similar. Said fluid discharge element (91) can be adapted so as to engage in shape with said flow regulation element (111, 111') when said beverage preparation recipient (11, 11') is on said operative retention position.

Said beverage preparation recipient (11, 11') can in this case be of the coffee pot type, or tea pot, presenting a base region adapted so that can be retained in removable manner on said second recipient placement disposition (9). In particular, the base region can present an element of single-way valve type, or similar, adapted so that only enables fluid injection and/or discharge when impinged by a flow pressure bigger than 1 bar, preferentially bigger than 1,2 bar, for example of 2 or 3 bar, or bigger. The beverage preparation apparatus (1) comprises for this purpose a flow pressurization device, of pump type, adapted so that can generate an hydraulic pressure and/or a sub-pressure on the flow circulation line between said first and second recipient placement dispositions (2, 9).

The apparatus (1) can comprise a fluid reservoir (5), for example for storing water, provided inside of the apparatus envelope (3) and at a level below said first and second recipient placement dispositions (2, 9). Said fluid reservoir (5) is provided in flow connection with a flow pressurization device (6), for example of hydraulic pump type, or similar, and with said fluid discharge element (91).

The portion (7) of edible substance used in the beverage preparation, for example a sachet of aromatic herbs, can be supplied to said beverage preparation recipient (11, 11') through an opening provided on top thereof.

As further represented in Figures 3 and 4, according to a particularly advantageous aspect of the present invention, the system comprises a beverage preparation apparatus (1) that is configured so that, in case the drinking and/or beverage preparation recipients (10, 11) are not placed on respective placement dispositions (2, 9), is devoid of cavities and projections, at least in the top surface thereof, preferentially also in the front, posterior and lateral surfaces.

Moreover, according to another particularly advantageous aspect of the present invention, the system comprises an apparatus (1) that is configures so that the height (H) thereof is much smaller, preferentially at least four times smaller than any of its other characteristic dimensions (D2, D3), particularly preferentially at least ten times smaller than the biggest of the other two characteristic dimensions (D2, D3).

It is preferred when said height (H) corresponds to the single height that at which extends the top surface of said apparatus (1), whereby this top surface can be provided by at least one of said apparatus envelope (3) and said access disposition (4).

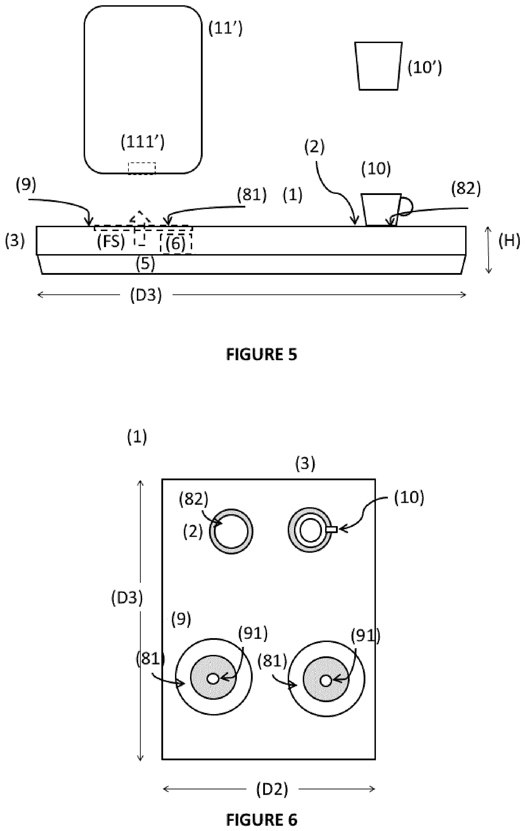

**Figures 5** and **6** represent another embodiment of similar configuration to the previous one, and that presents a plurality of units, in this case two, of both of said first and second recipient placement dispositions (2, 9).

The beverage preparation recipients (11') can in this case be configured so that can collect fluid for preparing a beverage, for example milk, or a previously prepared beverage, for example soluble coffee, so that can selectively supply a respective flow to at least one of two drinking recipients (10, 10') for final consumption by a user, provided in respective units of said first recipient placement disposition (2).

The preparation fluid reservoir (5) is in this case configured so that extends in the entire extension of width and length of the base region of the apparatus (1).

Said apparatus (1), in particular said apparatus envelope (3), preferentially configures jointly at least with the fluid reservoir (5) for beverage preparation, at least approximately the exterior shape and dimensions of said apparatus (1), preferentially corresponding at least approximately to a geometric shape of regular volume, providing a substantially continuous exterior surface substantially devoid of protuberances or cavities. Moreover, said apparatus (1), in particular said apparatus envelope (3) thereof, presents a top region extending in materially continuous manner along a single plane and with an area dimension that is bigger than the sum of the area of the lateral, front and top regions of said apparatus envelope (3).

Said apparatus (1), in particular said apparatus envelope (3) thereof, presents a first dimension, preferentially the height (H), of apparatus (1) that is at most 50%, preferentially at most 30%, particularly preferentially at most 15%, of at least a second characteristic dimension (D2) thereof, preferentially also of a third characteristic dimension (D3) thereof.

## Claims

1. **System** for preparing beverages, in particular based upon infusion of a respective precursor substance, including at least one type of beverage preparation recipient (11, 11') configured for collection of a fluid for infusion of the precursor substance, and further including a beverage preparation apparatus (1) that presents:
- a first recipient placement disposition (2) adapted so that it provides placement surface for a drinking recipient (10, 10'),
- a second recipient placement disposition (9) presenting a fluid discharge element (91) and adapted so that it provides operative placement of at least one type of beverage preparation recipient (11, 11'), configured for collection of the precursor substance and for preparing a beverage, wherein said beverage preparation recipient (11, 11') is configured so that it can receive pressurized flow through a base region thereof when placed on the operative position on said second recipient placement disposition (9), and that it can receive said precursor substance through an opening provided on a region different from the base region of said beverage preparation recipient (11, 11'),
said system being **characterised**
**in that** said apparatus (1) comprises a first heating device (81) associated with said second recipient placement disposition (9), whereby said first heating device (81) is adapted so that it can heat up the fluid volume contained on said beverage preparation recipient (11, 11') to a fluid temperature of at least 40 °C, preferentially of at least 60°C, and at most 100°C.

2. System according to claim 1, **characterized in that** said fluid discharge element (91) is adapted so that it can inject a pressurized flow into said beverage preparation recipient (11, 11') through a portion base thereof.

3. System according to claims 1 or 2, **characterized in that** said second recipient placement disposition (9) is adapted so that it provides removable retention of said beverage preparation recipient (11, 11') on the apparatus (1), preferentially by means of engagement of mechanical type of a base portion thereof with a portion associated with said second recipient placement disposition (9), so that the fluid discharge element (91) is aligned with a flow passageway portion on the base region of said beverage preparation recipient (11, 11').

4. System according to any of claims 1 to 3, **characterized in that** said apparatus (1) comprises a fluid circulation device (6), for example a hydraulic pump, downstream from the flow discharge of said second recipient placement disposition (9), said fluid circulation device (6) being adapted so that it provides a flow pressure of at most 4 bar, said fluid circulation device (6) being provided upstream and in fluid connection with said second recipient placement disposition (9).

5. System according to any of claims 1 to 3, **characterized in that** said apparatus (1) comprises a preparation fluid reservoir (5) for beverage preparation, for example water, provided in flow connection upstream of said second recipient placement disposition (9), said preparation fluid reservoir (5) for beverage preparation being provided in the interior of the apparatus envelope (3) or associated with the apparatus envelope (3) of said apparatus (1), preferentially so that it configures, jointly with the apparatus envelope (3) a volume of at least approximately regular geometric shape, said preparation fluid reservoir (5) for beverage preparation preferentially presenting a general format at least approximately similar to that of said apparatus envelope (3).

6. System according to any one of claims 1 to 5, **characterized in that** said first heating device (81) is configured with a surface in contact at least of proximity, with the base region of said beverage preparation recipient (11, 11').

7. System according to any one of claims 1 to 6, **characterized in that** said apparatus (1) comprises a second heating device (82) associated with said first recipient placement disposition (2) and preferentially configured as a surface in contact at least of proximity with the base region of said drinking recipient (10, 10'), whereby said second heating device (82) is adapted so that it can provide a heating temperature of at least 30 °C, preferentially of at least 40°C, and at most 50°C.

8. System according to any one of claims 1 to 7, **characterized in that** said first and second recipient placement dispositions (2, 9), in particular at least the base region thereof, are provided at a level at least approximately similar on said apparatus (1), preferentially are both provided on the top region of said apparatus (1).

9. System according to any one of claims 1 to 8, **characterized in that** said beverage preparation recipient (11, 11') is configured so that it provides a fluid collection volume at least two times bigger, preferentially at least four times bigger than the collection volume provided by said drinking recipient (10, 10').

10. System according to any one of claims 1 to 9, **characterized in that** said beverage preparation recipient (11, 11') presents a flow regulation element (111, 111'), including for example of the type single-way valve, disposed in the base region thereof and adapted so that it only provides flow passageway in case impinged with a previously defined flow pressure, preferentially with a flow pressure bigger than the atmospheric pressure and smaller than 5 bar, and preferentially further presents a beverage discharge element provided on another wall, different from the base wall of said beverage preparation recipient (11, 11').

11. System according to any one of claims 1 to 10, **characterized in that** said system includes portions (7) of precursor substances in respective enclosure, such as for example tea bags, adapted so that they can be introduced in said beverage preparation recipient (11).

12. System according to any one of previous claims 1 to 11, **characterized in that** said apparatus (1) is configured so that it presents at least one of the following:
- the apparatus envelope (3) of said apparatus (1) at least approximately configures the exterior shape and exterior dimensions of said apparatus (1), preferentially jointly at least with the fluid reservoir (5) for beverage preparation, providing a substantially continuous exterior surface devoid of protuberances or cavities, and
- the apparatus envelope (3) of said apparatus (1) presents a top region extending in materially continuous manner along a single plane and with an area dimension bigger than the sum of area dimension of the lateral, frontal and top regions of said apparatus envelope (3), and
- the apparatus envelope (3) of said apparatus (1) presents a first dimension, preferentially the height (H) of apparatus (1) that is at most 50%, preferentially at most 30%, particularly preferentially at most 15%, of at least a second characteristic (D2) thereof, preferentially also of a third characteristic (D3) thereof.

13. System according to any one of previous claims 1 to 12, **characterized in that** said apparatus (1) further presents at least one access disposition (4) adapted so that it can be manually and/or mechanically actuated and thereby provide selective access at least to said second recipient placement disposition (9), preferentially also to said first recipient placement disposition (2), whereby said access disposition (4) preferentially presents a shape of planar type and not presenting any protuberance, cavity or opening, whereby at least two of said apparatus envelope (3), access disposition (4) and fluid reservoir (5), jointly provide at least most part, preferentially the totality of the material exterior envelope of said apparatus (1), and jointly at least approximately configure the exterior volumetric shape of said apparatus (1) that preferentially corresponds to at least part of a coherent geometry.

14. System according to claim 13, **characterized in that** in case the access disposition (4) is in the closed position, said apparatus envelope (3) and access disposition (4) jointly define a volume devoid of any fluid discharge (91) exposed to the exterior of said apparatus (1), whereby said apparatus envelope (3) and access disposition (4) preferentially jointly define a materially continuous surface along at least most part of the extension of the exterior surface at least of the top, frontal and posterior portions of said apparatus (1), preferentially also of the lateral portions thereof.

15. System according to claims 13 or 14, **characterized in that** said access disposition (4) presents a first and a second actionable parts configured so that they can be moved with relation to the apparatus envelope (3), whereby the actuation of at least one of said first and second actionable parts can be carried out in at least one of: together with, and autonomously relative to the other actionable part.

16. System according to any one of claims 13 to 15, **characterized in that** said access disposition (4) is provided with at least one of: total dimension and dimension of the actuation space that corresponds to at least half, preferentially more than half, particularly preferentially at least approximately one of the characteristic dimensions (D2, D3) of the top region of said apparatus envelope (3).

## Patentansprüche

1. **System** zur Getränkeverteilung, insbesondere basierend auf Infusion einer entsprechenden Vorläufersubstanz, beinhaltend mindestens ein Typ eines Getränkezubereitungsbehälters (11, 11') gestaltet zum Einsammeln einer Flüssigkeit für eine Infusion einer entsprechenden Vorläufersubstanz und weiterhin ein Getränkezubereitungsgerät (1), aufweisend:
- eine erste Behältereinbaueinrichtung (2) so angepasst, um eine Einbauoberfläche für ein Getränkebehälter (10, 10') bereitzustellen;
- eine zweite Behältereinbaueinrichtung (9) aufweisend ein Flüssigkeitsentladungselement (91) und so angepasst, um einen betrieblichen Einbau von mindestens einem Typ von Getränkezubereitungsbehälter (11, 11'), gestaltet zum Einsammeln der Vorläufersubstanz und zur Getränkezubereitung,
wobei genannter Getränkezubereitungsbehälter (11, 11') so gestaltet ist, um Strömungsdruck durch einen Grundbereich davon zu empfangen, wenn er auf einer betrieblichen Stellung auf genannter Behältereinbaueinrichtung (9) gestellt, und um genannte Vorläufersubstanz durch eine Öffnung zu empfangen, die auf einen anderen Bereich des Grundbereiches von genannter Getränkezubereitungsbehälter (11, 11') bereitgestellt ist, genanntes System **dadurch gekennzeichnet, dass** genanntes Gerät (1) ein erstes Heizgerät (81) umfasst, das mit einer zweiten Behältereinbaueinrichtung (9) verbunden ist, wobei genanntes erstes Heizgerät (81) so angepasst ist, um das Flüssigkeitsvolumen gestaut auf genanntem Getränkezubereitungsbehälter (11, 11') auf eine Flüssigkeitstemperatur von mindestens 40°C, vorzugsweise mindestens 60°C, und höchstens 100°C aufzuheizen.

2. System gemäß Anspruch 1 **dadurch gekennzeichnet, dass** genanntes Flüssigkeitsentladungselement (91) so angepasst ist, um einen Strömungsdruck in genanntes Getränkezubereitungsbehälter (11, 11') mittels einer Grundmenge davon einzuspritzen.

3. System gemäß der Ansprüche 1 oder 2 **dadurch gekennzeichnet, dass** genannte zweite Behältereinbaueinrichtung (9) so angepasst ist, um einen bewegbaren Aufstau auf genanntem Getränkezubereitungsbehälter (11, 11') des Gerätes (1) bereitzustellen, vorzugsweise mittels eines mechanischen Eingriffs einer Grundmenge davon und mit einer Menge, die mit genannter zweiten Behältereinbaueinrichtung (9) verbunden ist, so dass das Flüssigkeitsentladungselement (91) mit einer Durchflussmenge auf dem Grundbereich von genanntem Getränkezubereitungsbehälter (11, 11') aneinander gereiht ist.

4. System gemäß einer der Ansprüche 1 bis 3 **dadurch gekennzeichnet, dass** genanntes Gerät (1) ein Flüssigkeitsumlaufgerät (6) aufweist, z.Bsp. eine Hydraulikpumpe, stromabwärts der Stromentladung von genannter Behältereinbaueinrichtung (9), genanntes Flüssigkeitsumlaufgerät (6) so angepasst, um einen Strömungsdruck von höchstens 4 Bar bereitzustellen, genanntes Flüssigkeitsumlaufgerät (6) stromaufwärts bereitgestellt und in flüssiger Verbindung mit genannter Behältereinbaueinrichtung (9).

5. System gemäß der Ansprüche 1 bis 3 **dadurch gekennzeichnet, dass** genanntes Gerät (1) ein Zubereitungsflüssigkeitsbehälter (5) zur Getränkezubereitung aufweist, z. Bsp. Wasser, bereitgestellt in Strömungsverbindung stromaufwärts von genannter Behältereinbaueinrichtung (9), genannter Zubereitungsflüssigkeitsbehälter (5) zur Getränkezubereitung bereitgestellt innerhalb des Geräteumschlages (3) oder verbunden mit dem Geräteumschlag (3) von genanntem Gerät (1), vorzugsweise so um gemeinsam mit dem Geräteumschlag (3) ein Volumen von mindestens einer annähernd regelmäßigen geometrischen Form zu gestalten, dieser Zubereitungsflüssigkeitsbehälter (5) zur Getränkezubereitung weist vorzugsweise ein allgemeines Format mindestens ähnlich von genanntem Geräteumschlag (3) auf.

6. System gemäß einer der Ansprüche 1 bis 5 **dadurch gekennzeichnet, dass** genanntes erstes Heizgerät (81) mit einer Oberfläche gestaltet ist, die zumindest in nahem Kontakt mit dem Grundbereich von genanntem Getränkezubereitungsbehälter (11, 11') ist.

7. System gemäß einer der Ansprüche 1 bis 6 **dadurch gekennzeichnet, dass** genanntes Gerät (1) ein zweites Heizgerät (82) verbunden mit genannter ersten Behältereinbaueinrichtung (2) aufweist und vorzugsweise gestaltet wie eine Oberfläche zumindest in nahem Kontakt mit dem Grundbereich von genanntem Getränkebehälter (10, 10'), wobei genanntes zweites Heizgerät (82) so angepasst ist, um eine Hitzetemperatur von mindestens 30°C, vorzugsweise mindestens 40°C, und höchstens 50°C bereitzustellen.

8. System gemäß einer der Ansprüche 1 bis 7 **dadurch gekennzeichnet, dass** genannten erste und zweite Behältereinbaueinrichtungen (2, 9), insbesondere mindestens der Grundbereich davon, auf einer Ebene vorgesehen sind, die zumindest annähernd mit der des genannten Geräts (1) vergleichbar ist, vorzugsweise beide auf der Oberfläche von genanntem Gerät (1) vorgesehen sind.

9. System gemäß einer der Ansprüche 1 bis 8 **dadurch gekennzeichnet, dass** genanntes Getränkezubereitungsbehälter (11, 11') so gestaltet ist, um ein Flüssigkeitssammelvolumen mindestens doppelt so groß bereitzustellen, vorzugsweise mindestens vier Mal größer als das Sammelvolument vorgesehen bei genanntem Getränkebehälter (10, 10').

10. System gemäß einer der vorigen Ansprüche 1 bis 9 **dadurch gekennzeichnet, dass** genanntes Getränkezubereitungsbehälter (11, 11') ein Durchflussregulierungselement (111, 111') aufweist, einschließlich z.Bsp. ein Einwegventil, angeordnet im Grundbereich davon und so angepasst, um nur Durchfluss bereitzustellen, wenn er mit einem vorbestimmten Strömungsdruck beaufschlagt wird, vorzugsweise mit einem Strömungsdruck größer als der Luftdruck und kleiner als 5 Bar, und vorzugsweise weiterhin ein Getränkeentladungselement aufweist, bereitgestellt an einer anderen Wand, unterschiedlich der Grundwand von genanntem Getränkezubereitungsbehälter (11, 11').

11. System gemäß einer der vorigen Ansprüche 1 bis 10 **dadurch gekennzeichnet, dass** genanntes System Vorläufersubstanzmengen (7) in entsprechender Umfassung beinhaltet, wie z.Bsp. Teebeutel, und so angepasst, um in genanntes Getränkezubereitungsbehälter (11) eingeführt zu werden.

12. System gemäß einer der vorigen Ansprüche 1 bis 11 **dadurch gekennzeichnet, dass** genanntes Gerät (1) so gestaltet ist, um mindestens eins von Folgendem aufweist:
- der Geräteumschlag (3) von genanntem Gerät (1) legt mindestens annähernd die Außengestalt und Außendimensionen von genanntem Gerät (1) fest, vorzugsweise gemeinsam mindestens mit dem Flüssigkeitsbehälter (5) zur Getränkezubereitung, bereitstellend eine wesentlich durchgehende Außenoberfläche ohne Ausstülpungen oder Hohlräume, und
- der Geräteumschlag (3) von genanntem Gerät (1) weist einen Oberbereich auf, der sich wesentlich durchgehend entlang einer einzigen Ebene erstreckt, und mit einer Flächendimension größer als die Summe der Flächendimension der Seiten-, Vorder- und Oberbereichen von genanntem Geräteumschlag (3), und
- der Geräteumschlag (3) von genanntem Gerät (1) weist eine erste Dimension auf, vorzugsweise die Höhe (H) des Gerätes (1) ist höchstens 50%, vorzugsweise höchstens 30%, insbesondere vorzugsweise höchstens 15% von mindestens einer zweiten Eigenschaft (D2) davon, vorzugsweise auch einer dritten Eigenschaft (D3) davon.

13. System gemäß einer der vorigen Ansprüche 1 bis 12 **dadurch gekennzeichnet, dass** genanntes Gerät (1) weiterhin mindestens eine Zugangseinrichtung (4) so angepasst aufweist, um manuell und/ oder mechanisch betätigt zu werden, und dadurch Auswahlzugang mindestens zu genannter Behältereinbaueinrichtung (9) bereitstellt, vorzugsweise auch zu genannter ersten Behältereinbaueinrichtung (2), wobei genannte Zugangseinrichtung (4) vorzugsweise eine Ebenforn und keinerlei Ausstülpung, Hohlraum oder Öffnung aufweist, wobei mindestens zwei der genannten Geräteumschlag (3), Zugangseinrichtung (4) und Flüssigkeitsbehälter (5) gemeinsam mindestens größtenteils, vorzugsweise die Gesamtheit des Außenmaterialumschlags von genanntem Gerät (1) bereitstellen und gemeinsam mindestens annähernd die Außenvolumengestalt von genanntem Gerät (1) gestalten, das vorzugsweise teils einer einheitlichen Geometrie entspricht.

14. System gemäß Anspruch 13 **dadurch gekennzeichnet, dass**, falls die Zugangseinrichtung (4) in geschlossener Position ist, genannte Geräteumschlag (3) und Zugangseinrichtung (4) gemeinsam ein Volumen frei von irgendeiner Flüssigkeitsentladung (91) ausgestellt außerhalb von genanntem Gerät (1), wobei genannte Geräteumschlag (3) und Zugangseinrichtung (4) vorzugsweise gemeinsam eine materiell durchgehende Oberfläche entlang mindestens größtenteils der ausgestreckten Außenoberfläche mindestens der Ober-, Vorder- und Hintermengen von genanntem Gerät (1) bestimmen, vorzugsweise auch der Seitenmengen davon.

15. System gemäß Ansprüche 13 oder 14 **dadurch gekennzeichnet, dass** genannte Zugangseinrichtung (4) eins der ersten und zweiten Betätigungsteile aufweist so gestaltet, um bzgl. des Geräteumschlags (3) bewegt zu werden, wobei die Betätigung von mindestens eins von genannten ersten und zweiten Betätigungsteilen durchgeführt wird in mindestens eins von: zusammen mit und unabhängig bzgl. der anderen Betätigungsteilen.

16. System gemäß einer der Ansprüche 13 bis 15 **dadurch gekennzeichnet, dass** genannte Zugangseinrichtung (4) bereitgestellt ist mit mindestens eins von: gesamter Dimension und Dimension des Betätigungraumes, der mindestens der Hälfte, vorzugsweise mehr als der Hälften, insbesondere vorzugsweise mindestens annähernd einer der Eigenschaftsdimensionen (D2, D3) des Oberbereiches von genanntem Geräteumschlag (3) entspricht.

## Revendications

1. **Système** de préparation de breuvages, fondé notamment sur l'infusion d'une substance précurseur respective, incluant au moins un type de récipient de préparation de breuvage(11, 11') configuré pour la collecte d'un fluide pour l'infusion de la substance précurseur, incluant en outre un appareil de préparation de breuvage (1) qui présente :
- Une première disposition de placement de récipient (2) adaptée afin qu'elle fournisse une surface de placement à un récipient pour boire (10, 10'),
- Une seconde disposition de placement de récipient (9) présentant un élément de décharge de fluide (91) et adaptée afin de fournir un placement opérationnel d'au moins un type de récipient de préparation de breuvage (11, 11'), configuré pour la collecte d'une substance précurseur et pour la préparation d'un breuvage, où
ledit récipient de préparation de breuvage (11, 11') est configuré afin qu'il puisse recevoir un flux pressurisé à travers une région de base de celui-ci lorsqu'il est placé sur la position opérationnelle sur ladite seconde disposition de placement de récipient (9) et qu'il puisse recevoir ladite substance précurseur à travers une ouverture fournie sur une région différente de la région de base dudit récipient de préparation de breuvage (11, 11'),
ledit système étant **caractérisé par le fait**
**que** ledit appareil (1) comprend un premier dispositif chauffant (81) associé à ladite seconde disposition de placement de récipient (9), où ledit premier dispositif chauffant (81) est adapté afin qu'il puisse chauffer le volume de fluide contenu dans ledit récipient de préparation de breuvage (11, 11') à une température de fluide d'au moins 40° C, de préférence au moins de 60° C, et au plus de 100° C.

2. **Système** selon la revendication 1, **caractérisé par le fait que** ledit élément de décharge de fluide (91) est adapté afin qu'il puisse injecter un flux pressurisé dans ledit récipient de préparation de breuvage (11, 11') à travers une base de portion de celui-ci.

3. **Système** selon la revendication 1 ou 2, **caractérisé par le fait que** ladite seconde disposition de placement de récipient (9) est adaptée afin qu'elle fournisse une rétention amovible dudit récipient de préparation (11, 11') sur l'appareil (1), de préférence au moyen d'un engagement de type mécanique d'une portion de base de celui-ci avec une portion associée à ladite seconde disposition de placement de récipient (9),afin que l'élément de décharge de fluide (91) soit aligné avec une portion de passage de flux sur la région de base dudit récipient de préparation de breuvage (11, 11').

4. Système selon une quelconque revendication entre 1 et 3, **caractérisé par le fait que** ledit appareil (1) comprend un dispositif de circulation de fluide (6), par exemple, une pompe hydraulique, en aval de la décharge de flux de ladite seconde disposition de placement de récipient (9), ledit dispositif de circulation de fluide (6) étant adapté afin qu'il fournisse une pression de flux à 4 bar, au plus, le dit dispositif de circulation de fluide (6) étant fourni en amont et en connexion de fluide avec ladite seconde disposition de placement de récipient (9).

5. Système selon une quelconque revendication entre 1 et 3, **caractérisé par le fait que** l'appareil (1) comprend un réservoir de fluide de préparation (5) pour la préparation de breuvage, comme par exemple, l'eau, fourni en connexion de flux en amont de ladite seconde disposition de placement de récipient (9), ledit réservoir de fluide de préparation (5) pour la préparation de breuvage étant fourni à l'intérieur de l'enveloppe de l'appareil (3) ou associé à l'enveloppe de l'appareil (3) dudit appareil (1), de préférence afin qu'il configure, conjointement avec l'enveloppe de l'appareil (3) un volume de forme, approximativement au moins, géométriquement régulière, ledit réservoir de fluide de préparation (5) pour la préparation de breuvage présentant, de préférence, un format général d'au moins approximativement similaire à cela de ladite enveloppe d'appareil (3).

6. Système selon une quelconque revendication entre 1 et 5, **caractérisé par le fait que** ledit premier dispositif chauffant (81) est configuré avec une surface en contact, au moins de proximité, avec la région de base dudit récipient de préparation de breuvage (11, 11').

7. Système selon une quelconque revendication entre 1 et 6, **caractérisé par le fait que** ledit appareil (1) comprend un second dispositif chauffant (82) associé à ladite première disposition de placement de récipient (2) et, de préférence, configuré comme une surface en contact, au moins à proximité, de la région de base dudit récipient pour boire (10, 10'), où ledit second dispositif chauffant (82) est adapté afin qu'il puisse fournir une température chauffante d'au moins 30°C, de préférence d'au moins 40°C et au plus de 50°C.

8. Système selon une quelconque revendication entre 1 et 7, **caractérisé par le fait que** lesdites, première et seconde, dispositions de placement de récipient (2, 9), en particulier, au moins la région de base de celles-ci, sont fournies à un niveau, au moins approximativement similaire, sur ledit appareil (1), de préférence, étant toutes les deux fournies sur la région supérieure dudit appareil (1).

9. Système selon une quelconque revendication entre 1 et 8, **caractérisé par le fait que** ledit récipient de préparation de breuvage (11, 11') est configuré afin qu'il fournisse un volume de collecte de fluide, au moins deux fois plus grand, de préférence, au moins quatre fois plus grand que le volume de collecte, fourni par ledit récipient pour boire (10, 10').

10. Système selon une quelconque revendication entre 1 et 9, **caractérisé par le fait que** ledit récipient de préparation de breuvage (11, 11') présente un élément de régulation de flux (111, 111'), y compris, par exemple, la valve de type à voie unique, disposée dans la région de base de celle-ci et adaptée afin qu'elle ne puisse fournir qu'un passage de flux qu'en cas d'empiètement avec une pression de flux préalablement définie, de préférence avec une pression de flux supérieure à la pression atmosphérique et inférieure à 5 bar et de préférence, présentant en outre un élément de décharge de breuvage fourni sur un autre mur, différent du mur de base dudit récipient de préparation de breuvage (11, 11').

11. Système selon une quelconque revendication entre 1 et 10, **caractérisé par le fait que** ledit système inclut des portions (7) de substances précurseur dans l'enceinte respective, telle que des sachets de thé, par exemple, adaptées afin qu'elles puissent être introduites dans le récipient de préparation de breuvage (11).

12. Système selon une quelconque revendication précédente entre 1 et 11, **caractérisé par le fait que** ledit appareil (1) est configuré afin qu'il présente au moins l'une des circonstances suivantes :
- L'enveloppe de l'appareil (3) dudit appareil (1) configure, au moins approximativement, la forme extérieure et les dimensions extérieures dudit appareil (1), de préférence conjointement au moins avec le réservoir de fluide (5) pour la préparation de breuvage, fournissant une surface extérieure substantiellement continue, dépourvue de protubérances ou de cavités, et
- L'enveloppe de l'appareil (3) dudit appareil (1) présente une région supérieure se prolongeant d'une manière matériellement continue le long d'un seul plan et avec une dimension de la zone supérieure à la somme de la dimension de la zone des régions, latérale, frontale et supérieur, de ladite enveloppe de l'appareil (3), et
- L'enveloppe de l'appareil (3) dudit appareil (1) présente une première dimension, de préférence la hauteur (H) de l'appareil (1) qui est à 50 % au plus, de préférence à 30 % au plus, particulièrement, de préférence, à 15 % au plus, d'au moins une seconde caractéristique (D2) de celle-ci, de préférence également d'une troisième caractéristique (D3) de celle-ci.

13. Système selon une quelconque revendication précédente entre 1 et 12, **caractérisé par le fait que** ledit appareil (1) présente en outre, au moins une disposition d'accès (4) adaptée afin qu'elle puisse être manuellement et/ou mécaniquement actionnée et fournissant ainsi un accès sélectif au moins vers ladite seconde disposition de placement de récipient (9), de préférence également vers ladite première disposition de placement de récipient (2), où ladite disposition d'accès (4) présente, de préférence, une forme de type planaire et ne présentant aucune protubérance, cavité ou ouverture, où au moins deux de ces dits éléments : enveloppe d'appareil (3), disposition d'accès (4) et réservoir de fluide (5), fournissent conjointement, au moins la plupart, de préférence la totalité, de l'enveloppe extérieure matérielle dudit appareil (1), et configurent conjointement, au moins approximativement, la forme volumétrique extérieure dudit appareil (1) qui correspond de préférence à, au moins en partie, une géométrie cohérente.

14. Système selon la revendication 13, **caractérisé par le fait que** si la disposition d'accès (4) est dans la position fermée, ladite enveloppe d'appareil (3) et la disposition d'accès (4) définissent conjointement un volume dépourvu de toute décharge de fluide (91), exposée à l'extérieur dudit appareil (1), où ladite enveloppe de l'appareil (3) et la disposition d'accès (4) définissent, de préférence conjointement, une surface matériellement continue le long d'au moins la plupart de l'extension de la surface extérieure, au moins des portions supérieure, frontale et postérieure, dudit appareil (1), également de préférence des portions latérales de celle-ci.

15. Système selon la revendication 13 ou 14, **caractérisé par le fait que** ladite disposition de l'accès (4) présente une première et une seconde parties actionnables, configurées afin qu'elles puissent être déplacées par rapport à l'enveloppe de l'appareil (3), où l'actionnement d'au moins une des dites première et seconde parties actionnables peut être mené dans, au moins, l'une de ces circonstances suivantes : avec et de manière autonome par rapport à l'autre partie actionnable.

16. Système selon une quelconque revendication entre 13 et 15, **caractérisé par le fait que** ladite disposition d'accès (4) est fournie avec au moins, l'un de ces éléments suivants : dimension totale et dimension de l'espace d'actionnement qui correspond à au moins la moitié, de préférence davantage que la moitié, en particulier, de préférence au moins approximativement, l'une des dimensions caractéristiques (D2, D3) de la région supérieure de ladite enveloppe de l'appareil (3) .
